# EUROPÄISCHE PATENTANMELDUNG

(11) **EP 4 299 303 A1**
(43) Veröffentlichungstag der Anmeldung: **03.01.2024**
(21) Anmeldenummer: 22181318.1
(22) Anmeldetag: 27.06.2022
(51) Int. Cl.: B32B 3/12, B32B 3/26, B32B 27/08, B32B 27/30, B32B 27/36, B32B 27/40, C08L 63/00, C09D 5/00, C09D 163/00, E04F 15/00

(54) **RUTSCHSICHERER BODENBELAG UND VERFAHREN ZU DESSEN HERSTELLUNG**

(71) Anmelder: Fitzen, Georg, 24955 Harrislee (DE)
(72) Erfinder: Fitzen, Georg, 24955 Harrislee (DE)
(74) Vertreter: Glawe, Delfs, Moll

(57) **Zusammenfassung**

Rutschsicherer Bodenbelag mit einer ersten Schicht (3)zum festen Haften auf einem Boden, einem darauf aufgebrachten Netz (4) umfassend hochstehende Stege (41) sowie von den Stegen umrandete Öffnungen (42) und einer das Netz durchgängig überdeckenden zweiten Schicht (5). Die zweite Schicht haftet in den Öffnungen (42) des Netzes an der ersten Schicht. Das Netz ist von der ersten und zweiten Schicht von unten und oben eingekapselt, so dass durch die beiden Schichten die Stege des Netzes in ihrer jeweiligen Position gesichert sind. Der Bodenbelag (2) ist in einem Bereich der Stege des Netzes erhaben gegenüber dem Bodenbelag in den Öffnungen des Netzes. Das hochstehende Netz bietet die zur Rutschsicherung erforderliche Griffigkeit, während es durch die beiden einkapselnden Schichten fixiert und in den Bodenbelag integriert ist. So ist das Netz rutschsicher an seiner Position gehalten und wird durch die bedeckende Schicht vor Abnutzung geschützt.

## Beschreibung

Die Erfindung betrifft einen rutschsicheren Bodenbelag. Er weist einen mehrschichtigen Aufbau auf, mit einer ersten Schicht, die zum festen Haften auf dem Boden ausgebildet ist, und einem Netz mit einer Mehrzahl von hochstehenden Stegen und mit einer Mehrzahl von den Stegen umrandeter Öffnungen, das auf die erste Schicht aufgebracht ist.

Wind und Witterung ausgesetzter Boden sowie begehbare oder befahrbare Strukturen, bspw. Rampen oder Gangways, können insbesondere bei Einwirkung von Regen, anderem Niederschlag, Öl, pastösen Stoffen wie beispielsweise Fett oder bei Schiffen auch unter Einwirkung von Seegang und/oder Gischt rutschig für sich darauf bewegende Fußgänger oder Fahrzeuge sein. Das ist der Fall, wenn die Haftreibung zwischen dem Boden und einer Schuhsohle oder einem Reifen nicht ausreicht, um ein Rutschen zu verhindern. Grund für die zu geringe Haftreibung kann eine zu hohe Glattheit der Bodenoberfläche und/oder ein Flüssigkeitsfilm auf der Bodenoberfläche sein. Bei einem der Witterung oder anderweitiger Feuchtigkeit ausgesetzten Boden kann beispielsweise Wasser infolge von Niederschlag, Seegang, Gischt oder aus umliegenden Wasserbereichen wie Hafenbecken, Pfützen oder Schwimmbecken auf den Boden gelangen und einen Flüssigkeitsfilm bilden. Fußgänger oder Fahrzeuge, die sich auf dem Boden bewegen, können dadurch ins Rutschen kommen und Schaden nehmen. Dies ist besonders dann eine Gefahr, wenn es sich um eine schräge Bodenfläche, wie beispielsweise eine Rampe, handelt. Rampen zur fahrenden Beladung oder zum Einstieg von Passagieren auf Schiffe befinden sich in der Regel in ungeschützten Außenbereichen und sind somit besonders dem Wind und Wetter ausgesetzt. Die Oberfläche des Bodens ist dann neben dem Verschleiß und/oder Abrieb durch das Befahren und/oder Begehen des Bodens auch dem Witterungsverschleiß ausgesetzt.

Zur Sicherung von Fußgängern oder Fahrzeugen gegen ein Rutschen auf einem Boden ist es bekannt, die Oberfläche des Bodens aufzurauen oder den Boden mit einem Material mit rauer Oberfläche zu beschichten. Besonders bei Feuchtigkeit ausgesetzten Bodenflächen kann es zu einer Benetzung der (rauen) Oberfläche mit einem Flüssigkeitsfilm kommen, der die Haftreibung wiederum verringert. Es ist daher bekannt, die Oberfläche des Bodens mit Aufrauhungen oder kleinteiligen Strukturen, beispielsweise regelmäßig oder unregelmäßig angeordneten Erhebungen oder Wülsten des Bodenmaterials selbst, zu versehen. Dann kann sich die Feuchtigkeit in den Vertiefungen sammeln, sodass sich auf den Erhebungen kein oder ein verringerter Flüssigkeitsfilm bildet. Die damit verbesserte Haftreibung von Reifen oder Schuhsohlen auf den Erhebungen der Oberfläche wirkt einem Rutschen entgegen.

Die Oberfläche des Bodens ist neben Witterungsverschleiß auch Verschleiß und/oder Abrieb durch das Befahren und/oder Begehen des Bodens ausgesetzt. Je nach Beschaffenheit des Bodens mit seiner Oberfläche kann es durch das Begehen und/oder Befahren bei der Benutzung eines so strukturierten Bodens zum Herausbrechen von Teilen der Erhebungsstrukturen kommen, sodass die Rutschsicherheit beeinträchtigt wird. Da die Bodenoberfläche selbst häufig nur schwer oder gar nicht repariert werden kann, müsste zur Instandsetzung häufig der gesamte Boden ersetzt werden, was aufwendig und kostenträchtig ist. Im Stand der Technik ist es daher bekannt, den glatten Boden mit einem Material zu beschichten, und durch das Beschichten Erhebungen oder Wülste aus diesem Material, statt dem Bodenmaterial selbst, zu bilden.

Bei Verwendung von Epoxidharzen zur Beschichtung können beispielsweise durch Versprühen des Epoxidharzes mit weiter Düsenöffnung und geringem Druck Wülste in der Oberfläche erzeugt werden. Dies führt zu einer verhältnismäßig dicken und schweren Beschichtung. Auch hier können die Wülste durch das Begehen oder Befahren abnutzen und/oder herausbrechen. Eine Reparatur ist möglich, aber mit hohem Aufwand verbunden, da die gesamte (dicke) Beschichtung beispielsweise durch Sandstrahlen abgetragen werden muss.

Ferner ist es bekannt, in eine Oberflächenbeschichtung Partikel einzubinden, die teilweise nach oben überstehen. Die Form der Partikel kann gleichmäßig (beispielsweise Quarzsand, Glasperlen) oder ungleichmäßig (beispielsweise kleine Steine) sein. Die Partikel verbessern die Haftreibung von Reifen oder Schuhsohlen auf der Oberfläche. Die Partikel werden aber lediglich durch das Schichtmaterial gehalten. Bei der Benutzung der Oberfläche durch Begehen oder Befahren kommt es daher oft zum Herausbrechen der Partikel. Dies beeinträchtigt die rutschsichernde Wirkung der Beschichtung. Außerdem können die herausgebrochenen Partikel in Wasserabläufe des Bodens gelangen und den Wasserablauf behindern. Insbesondere bei der Verwendung von Steinen sind die Beschichtungen in der Regel sehr schwer. Ein Aufbringen auf eine schräge Fläche ist erschwert, da sich die Partikel beim Aufbringen auf ein noch nicht ausgehärtetes Material im unteren Bereich der schrägen Fläche ansammeln, sodass eine gleichmäßige Verteilung schwierig und nur mit viel Fachkenntnis sowie erhöhtem Aufwand erreicht werden kann. Ferner besteht das Risiko, dass die Partikel sich auch aufgrund der Belastung durch die Beschichtung durcharbeiten und sie beschädigen können. Da die Beschichtung häufig auch als Korrosionsschutz des darunterliegenden Bodens fungiert, wird dieser dadurch beeinträchtigt.

Der Erfindung liegt die Aufgabe zugrunde, eine Rutschsicherung zur Verfügung zu stellen, die besser gegen Verschleiß geschützt ist und reparaturgünstiger ist.

Die erfindungsgemäße Lösung liegt in den Merkmalen der unabhängigen Ansprüche. Vorteilhafte Weiterbildungen sind Gegenstand der abhängigen Ansprüche.

Erfindungsgemäß ist ein rutschsicherer Bodenbelag vorgesehen, umfassend eine erste Schicht, die zum festen Haften auf einem Boden ausgebildet ist; ein Netz mit einer Mehrzahl von hochstehenden Stegen und mit einer Mehrzahl von den Stegen umrandeter Öffnungen, das auf die erste Schicht aufgebracht ist; und eine zweite Schicht, die das Netz durchgängig überdeckt; wobei die zweite Schicht in den Öffnungen des Netzes an der ersten Schicht haftet und das Netz mit seinen Stegen von der ersten Schicht von unten und von der zweiten Schicht von oben eingekapselt ist in der Weise, dass durch die erste und zweite Schicht die Stege des Netzes in ihrer jeweiligen Position gesichert sind, und wobei der Bodenbelag in einem Bereich der Stege des Netzes erhaben gegenüber dem Bodenbelag in den Öffnungen des Netzes ist.

Zuerst seien einige verwendete Begriffe erläutert:
Unter einem Bodenbelag werden auf einem Boden aufgebrachte Strukturen verstanden, die am Boden haften und deren Oberfläche von Fußgängern begangen oder von Fahrzeugen befahren werden kann. Rutschsicher ist ein Bodenbelag, wenn seine Oberfläche eine so große Haftreibung aufweist, dass Fußgänger und/oder Fahrzeuge bei den typischerweise herrschenden Bedingungen, unter denen der Bodenbelag eingesetzt wird, nicht ins Rutschen kommen. Der Begriff "Boden" bezieht sich auf eine entsprechend tragfähige Struktur als Unterlage für den Bodenbelag, wie bspw. ein Fußboden, ein Fahrzeugdeck, eine Rampe, eine Gangway, und/oder ein Schiffsdeck etc.

Unter einer Schicht wird vorliegend eine Lage eines Materials verstanden. Bei dem Material kann es sich beispielsweise um ein Epoxidharz, eine Farbe oder einen Kleber handeln. Die Schicht kann beispielsweise durch Aufsprühen oder Anstrich aufgebracht sein. Damit das Material der Schicht auf der zu beschichtenden Oberfläche (einem Boden, einem Netz, oder einer anderen Schicht) haftet, kann bei nicht ausreichender Rauheit der Oberfläche zusätzlich ein Haftgrund verwendet werden. Die Schicht kann auch als Folie vorliegen.

Ein Netz ist vorliegend eine regelmäßige Anordnung von Stegen, die an Knotenpunkten miteinander verbunden sind und Öffnungen des Netzes umranden. Die Stege weisen eine vorbestimmte Höhe auf und sind hochstehend verglichen mit den Schichten des Bodenbelags. Hochstehend bedeutet hier, dass eine freie Höhe der Stege des Netzes größer ist als eine Dicke der zweiten Schicht. Die freie Höhe der Stege des Netzes entspricht demjenigen Teil der Höhe der Stege, um den die Stege des Netzes die erste Schicht überragen. Die freie Höhe der Stege beträgt zweckmäßigerweise mindestens das Doppelte der Dicke der zweiten Schicht. Typischerweise sind dann die Stege des Netzes ausreichend hoch, dass der Bodenbelag die erforderliche Griffigkeit bietet. Der Bodenbelag mit dem integrierten Netz in einem Bereich der Stege des Netzes ist dann erhaben gegenüber dem Bodenbelag in den Öffnungen des Netzes.

Alternativ oder zusätzlich ist es vorteilhaft, dass die Höhe der Stege des Netzes im Verhältnis von mindestens 1:50 und höchstens 1:10 zu der Breite der Öffnungen des Netzes steht. Durch diese Aufteilung der Oberfläche zwischen Öffnungen, in denen sich die Flüssigkeit sammeln kann, und Stegen, auf denen bspw. ein Schuh bzw. Reifen Halt bekommt, wird der rutschsichernde Effekt begünstigt. Weiter ist es zweckmäßig, dass die Höhe der Stege des Netzes im Verhältnis von mindestens 1:6 und höchstens 1:3 zur Breite der Stege steht. Ein Steg ist ein langgestrecktes Element des Netzes und an seiner Basis an der ersten Schicht befestigt. Die Breite eines Stegs ist vorliegend die maximale Abmessung des Stegs senkrecht zu der Achse seiner Erstreckung und parallel zum Boden, insbesondere an der Basis des Stegs. So wird ein ausreichend steiler Winkel für den Halt, insbesondere von Reifen bzw. Schuhen, am Bodenbelag in den Bereichen der Stege des Netzes bereitgestellt, und gleichzeitig durch die größere Breite die Stabilität der Stege des Netzes gesichert.

Eine Überdeckung eines Netzes mit einer Schicht wird als durchgängig verstanden, wenn die gesamte Fläche des Netzes einschließlich der Stege und Öffnungen des Netzes lückenlos von der Schicht überdeckt ist. Eine solche durchgängig überdeckende Schicht kann das Netz und seine Unterlage somit gegen äußere Einflüsse schützen. Der Aspekt der Durchgängigkeit bezieht sich nicht auf die Ränder des Netzes, wo bspw. Schnittkanten auftreten können.

Ein Netz ist eingekapselt von einer ersten Schicht von unten und von einer zweiten Schicht von oben, wenn die erste Schicht von unten an den Stegen des Netzes haftet und die zweite Schicht von oben an den Stegen des Netzes haftet und die beiden Schichten in den Öffnungen des Netzes aneinander haften. Die beiden Schichten bilden durch ihr Aneinanderhaften in den Öffnungen des Netzes Taschen, in denen die Stege des Netzes sitzen und gehalten werden. Die Haftung der zweiten Schicht auf der ersten Schicht hält die Stege in den Taschen bzw. verhindert eine Bewegung der Stege aus den Taschen heraus. An den Rändern des Netzes kann es Bereiche, beispielsweise an Schnittkanten, geben, in denen Stege des Netzes nicht oder nicht vollständig eingekapselt sind.

Kern der Erfindung ist der Gedanke, dass ein hochstehendes Netz die zur Rutschsicherung erforderliche Griffigkeit bietet, während es durch die beiden einkapselnden Schichten fixiert und in den Bodenbelag integriert ist. So ist das Netz rutschsicher an seiner Position gehalten und wird durch die bedeckende Schicht vor Abnutzung geschützt. Die hochstehenden Stege des Netzes sorgen für eine Strukturierung auf der Oberseite des Bodenbelags, die Fußgängern oder Fahrzeugen sicheren Halt gegen Rutschen bietet, indem sie die Haftreibung vergrößert. Ein schädlicher Feuchtigkeitsfilm wird ebenfalls verhindert, indem sich Feuchtigkeit in den gegenüber den hochstehenden Stegen tiefer liegenden Bereichen sammelt. Gleichzeitig ist das Netz durch seine zusammenhängende Struktur im Vergleich zu einzelnen Steinchen oder anderweitigen Partikeln gegen ein Herausbrechen einzelner Bestandteile besser gesichert. Zusätzlich sichert die untere erste Schicht und die obere zweite Schicht, die zusammen das Netz von oben und unten einkapseln, das Netz weiter gegen Verschiebungen und Verzerrungen.

Durch die Einkapselung des Netzes erweitern sich die Möglichkeiten für die Materialauswahl für das Netz, da auch kostengünstige, leicht zu verarbeitende Kunststoffe wie Acrylnitril-Butadien-Styrol-Copolymer (ABS) und Polyethylenterephthalat-Glykol (PET-G) verwendet werden können, die selbst keine hohe Reißfestigkeit aufweisen oder witterungsempfindlich sind.

Die erste untere Schicht schützt das Substrat vor Beschädigung durch das Netz bei Druckeinwirkung bei der Benutzung. Durch den Schichtaufbau bewirkt der Bodenbelag auch einen Korrosionsschutz für den darunterliegenden Boden.

Der Bodenbelag kann im Vergleich zu den bekannten rutschsicheren Bodenbelägen aus dem Stand der Technik einfacher repariert werden, indem die Schichten und das Netz entfernt und anschließend erneuert werden. Das Entfernen kann durch Abschleifen bis auf den Boden erfolgen. Da es sich um verhältnismäßig dünne Schichten ohne eingelagerte Festkörper, wie Steinchen o.ä., handelt, ist der Aufwand beim Entfernen geringer als bei dicken Bodenbelägen des Standes der Technik.

Der Bodenbelag bietet gleichzeitig eine hohe Rutschsicherheit, wie sie sonst von Bodenbeschichtungen mit eingelassenen Partikeln bekannt ist, und eine leichtere Auftragbarkeit, wie sie bei reinen Anstrichen der Fall ist. Dies wird kombiniert mit einer leichteren Reparierbarkeit als bei rutschsicheren Strukturen des Bodenmaterials selbst. Außerdem weist der erfindungsgemäße Bodenbelag eine große Robustheit gegenüber Verschleiß und/oder Abrieb durch Befahren und/oder Begehen sowie Witterung auf.

Zusätzlich ist der Bodenbelag einfach von Schnee, Öl oder Schmutz zu reinigen. Das ist ein in der Praxis erheblicher Vorteil insbesondere gegenüber den aus dem Stand der Technik bekannten Bodenbelägen, bei denen zur Rutschsicherheit Partikel eingelagert oder Strukturen, wie Wülste aus Epoxidharz, aufgebracht sind. Dort ist die Reinigung der Zwischenräume sehr schwierig, und bei maschineller Reinigung mittels Kehrmaschinen besteht ein hohes Risiko der Beschädigung der Struktur durch Herausbrechen der Partikel bzw. Losreißen der Wülste aus Epoxidharz. Dieses Risiko besteht bei der Erfindung dank der Einkapselung nicht.

Mit Vorteil ist das Netz teilweise in die erste Schicht eingebettet, so dass die Stege des Netzes mindestens teilweise formschlüssig mit der ersten Schicht verbunden sind. Dies stärkt die Verbindung zwischen der ersten Schicht und dem Netz. Die Einbettung kann beispielsweise erreicht werden, indem das Netz vor dem vollständigen Aushärten der ersten Schicht auf diese aufgebracht und durch Eigengewicht und/oder zusätzlichen Druck leicht in sie hinein gedrückt wird. Indem das Netz teilweise in die erste Schicht eingebettet ist, wird es besser gegen Verrutschen von Stegen durch Krafteinwirkung beim Befahren und/oder Begehen gesichert. Das erhöht die Rutschsicherheit. Durch die damit erreichte Verminderung von Dehnungs- und Stauchungsbewegungen der einzelnen Stege wird die Integrität des Netzes gewahrt und ein Herausbrechen der Stege verhindert. Zwingend ist dies aber nicht; so kann alternativ oder zusätzlich die Verbindung zwischen der ersten Schicht und dem Netz zusätzlich auch klebend sein. Ferner kann ein Haftgrund zwischen der ersten Schicht und dem Netz eingebracht sein.

Mit Vorteil umfasst die erste Schicht ein Epoxidharz, das vorzugsweise als Anstrich und/oder als aufgesprühte Schicht auf dem Boden haftet. Alternativ oder zusätzlich kann vorgesehen sein, dass die zweite Schicht ein Epoxidharz umfasst, das vorzugsweise als Anstrich und/oder als aufgesprühte Schicht auf der ersten Schicht haftet. Dabei ist es weiter bevorzugt, dass die erste und/oder die zweite Schicht eine Dicke von mindestens 30 µm und höchstens 250 µm, vorzugsweise mindestens 50 µm und höchstens 150 µm, weiter vorzugsweise mindestens 60 µm und höchstens 100 µm, aufweist. Epoxidharz bietet den Vorteil, dass es als Anstrich auf den Boden gestrichen werden und/oder unter Verwendung von Sprüh- oder Spritzgeräten mit oder ohne Druckluft aufgesprüht werden kann. Vorteilhaft ist bei einem Anstrich und/oder Aufsprühen, dass die Schicht die gewünschte Oberfläche durchgängig überdeckt und auch in Kanten, die beispielsweise von den Stegen des Netzes und der darunterliegenden Schicht gebildet werden, eingedrungen ist. Solch ein Anstrich und/oder Aufsprühen, beispielsweise mit einem Epoxidharz, kann auch dünn aufgetragen werden, nämlich zweckmäßigerweise mindestens 30 µm und höchstens 250 µm, vorzugsweise mindestens 50 µm und höchstens 150 µm, weiter vorzugsweise mindestens 60 µm und höchstens 100 µm, dick. Da so vor einer Reparatur lediglich eine dünne Schicht Epoxidharz abgetragen werden muss, wird der Reparaturaufwand für den Bodenbelag verringert. Außerdem bietet Epoxidharz im ausgehärteten Zustand eine hohe Festigkeit und Verschleißresistenz. Dies verbessert die Sicherung des Netzes von unten und/oder von oben an seiner Position.

Zweckmäßigerweise umfasst die erste Schicht eine klebfähige, vorzugsweise zugfeste, Folie. Alternativ oder zusätzlich ist es zweckmäßig, dass die zweite Schicht eine klebfähige Folie umfasst. Klebfähig bedeutet, dass die Folie selbstklebend ist oder mittels einem Kleber auf einer Oberfläche aufgeklebt werden kann. Die Verwendung einer Folie ermöglicht ein schnelles Aufbringen des Bodenbelags. Insbesondere kommt es nicht zu Wartezeiten wegen einer Aushärtung. Die so aufgebrachte Folie sichert den Bodenbelag am Boden und/oder sichert das Einkapseln des Netzes zwischen der ersten Schicht und der zweiten Schicht. Zweckmäßigerweise ist auch die zweite Folie zugfest.

Vorzugsweise ist das Netz als eine aus den Stegen des Netzes gebildete Gitterstruktur aus Rechtecken und/oder Sechsecken und/oder Parallelogrammen und/oder Kreisen ausgeführt. Alternativ oder zusätzlich verlaufen die Stege des Netzes in einer Hauptrichtung der Belastung mindestens teilweise versatzfrei. Weiter alternativ oder zusätzlich verlaufen die Stege des Netzes in eine Mehrzahl von Richtungen der Belastung mindestens teilweise versatzfrei. Unter einer Gitterstruktur wird eine regelmäßige Anordnung der Stege verstanden. Durch die regelmäßige Anordnung der Stege als Gitterstruktur aus Rechtecken und/oder Sechsecken und/oder Parallelogrammen und/oder Kreisen wird eine über die Fläche im Wesentlichen gleichbleibende Eigenschaft der Rutschsicherheit erreicht. Die Verlaufsrichtung der Stege ist bestimmt durch deren Längsachse. Unter einer Hauptrichtung der Belastung wird eine typische und/oder durch bauliche Eigenschaften bestimmte Bewegungsrichtung von Fahrzeugen und/oder Fußgängern bei Benutzung des Bodenbelags verstanden. Beispielsweise bei Rampen oder Gangways erstreckt sich die Hauptrichtung der Belastung entlang der Rampe oder Gangway. An Kreuzungsstellen kann es beispielsweise zwei quer zueinander orientierte Richtungen der Belastung geben. An Stellen mit einem ungerichteten oder omnidirektionalen Publikumsverkehr, wie beispielsweise Sonnendecks auf Schiffen, kann es eine Mehrzahl von Richtungen der Belastung geben. Wenn die Stege des Netzes in einer der genannten Belastungsrichtungen versatzfrei verlaufen, werden in die Belastungsrichtung wirkende Kräfte optimal durch die Stege aufgenommen. Die Form der Öffnungen des Netzes kann ebenfalls an die Belastungsrichtung angepasst sein, um den versatzfreien Verlauf zu ermöglichen. Durch den versatzfreien Verlauf wirkt die Struktur der Stege einer Verschiebung des Netzes in Belastungsrichtung entgegen. So wird der Verschleiß des Bodenbelags durch Krafteinwirkung bei der Benutzung reduziert.

Mit Vorteil weisen die Stege des Netzes eine flache Unterseite auf. Die Unterseite ist die Seite der Stege, die der ersten Schicht zugewandt ist, mithin also die die Seite mit der die Stege auf der ersten Schicht und dem Boden aufliegen. Damit werden eine möglichst großflächige Auflage und damit eine geringe Flächenpressung erreicht, außerdem wird so das Risiko vermieden, dass es unter hoher Belastung der Stege zu einer Punktion der unteren Schicht kommen könnte.

Vorzugsweise weisen die Stege ein halbrundes Profil auf, wobei die Rundung nach oben weist. Alternativ oder zusätzlich weisen die Stege des Netzes ein dreieckiges Profil auf, wobei die Spitze nach oben weist. Auch eine Ausführungsform mit einem an der Spitze abgerundeten dreieckigen Profil ist möglich, wobei vorzugsweise die Abrundung einen großen (mindestens das Zweifache der Dicke der zweiten Schicht) Radius aufweist. Ein dreieckiges Profil führt zu einer besonders guten Haftreibung bzw. Griffigkeit für Reifen und/oder Schuhe. Ein rundes oder abgerundetes Profil hat den Vorteil größerer Robustheit, da sich ein feuchter Anstrich und/oder eine feuchte aufgesprühte Schicht nicht von einer Kante zurückzieht und/oder eine aufzubringende Folie direkt der Kontur folgen kann und nicht abrupt umgelenkt bzw. geknickt wird. So werden die Durchgängigkeit der zweiten Schicht und das Einkapseln des Netzes gesichert. Besonders bevorzugt ist hierbei ein Profil mit einem großen Radius, da der große Radius das Zurückziehen eines Anstrichs und/oder einer feuchten aufgesprühten Schicht von einer Kante bzw. das Knicken der Folie besonders gut verhindert.

Mit Vorteil weisen die Stege des Netzes eine Höhe von wenigstens 0,2 mm und höchstens 2,0 mm auf. Alternativ oder zusätzlich ist es zweckmäßig, dass die Stege des Netzes eine Breite von wenigstens 0,6 mm und höchstens 12 mm aufweisen und/oder dass die Öffnungen des Netzes eine mittlere Breite von höchstens 100 mm, vorzugsweise wenigstens 2 mm, aufweisen. Mit Vorteil sind ausgewählte Stege, zweckmäßigerweise diejenigen quer zur Belastungsrichtung, höher als diejenigen in Belastungsrichtung. Dies erlaubt es, die Flüssigkeit zwischen Beschichtung und Reifen bzw. Schuh zur Seite hin herauszudrücken. Durch diese Werte für die Höhe und/oder Breite der Stege und/oder die Breite der Öffnungen wird der rutschsichernde Effekt bei typischen Größen von Reifen, Schuhen oder Fußsohlen erreicht. Die genannte Höhe ist geeignet, einen Flüssigkeitsfilm zu durchbrechen. Die Breite der Stege ermöglicht eine ausreichende Oberfläche für das Befahren und/oder Begehen des Bodenbelags. Die Breite der Öffnungen ermöglicht ein Sammeln von Flüssigkeiten oder Verschmutzungen in den Öffnungen, wodurch diese die Haftreibung der gesamten Fläche weniger beeinträchtigen.

Vorzugsweise sind die Stege abschnittsweise verschieden hoch ausgeführt, so dass das Netz Bereiche mit höheren Stegen und Bereiche mit niedrigeren Stegen umfasst. Damit kann die Aquaplaning-Gefahr insbesondere beim Befahren verringert werden. Denn das Rad fährt dann größtenteils auf den Bereichen mit höheren Stegen und berührt die niedrigeren Bereiche der Stege nur noch in geringem Umfang, was eine Lücke für das Wasser lässt. Das Wasser kann so aus dem Volumen zwischen Boden und Reifen entweichen, wodurch Aquaplaning vermieden wird.

Vorzugsweise sind die Stege des Netzes mittels 3D-Druck gefertigt. Alternativ oder zusätzlich sind die Stege des Netzes aus Acrylnitril-Butadien-Styrol-Copolymer (ABS) und/oder aus Polyethylenterephthalat-Glykol (PET-G) und/oder aus Metall und/oder aus einer Faser, vorzugsweise Basaltfaser, weiter vorzugsweise Kohlefaser, besonders bevorzugt Glasfaser, gefertigt. Eine Fertigung der Stege des Netzes mittels 3D-Druck ermöglicht eine flexible Einstellung der gewünschten Parameter für die Profilform, die Höhe und/oder Breite der Stege und/oder die mittlere Breite der Öffnungen. So kann das Netz an die jeweiligen Eigenschaften des Einsatzbereichs angepasst werden. Beispielsweise ermöglicht dies, in einem Barfußbereich ein abgerundetes Profil und engere Öffnungen zu wählen als in einem Arbeitsbereich. ABS und PET-G lassen sich gut verarbeiten, insbesondere mittels 3D-Druck, und weisen eine hohe Festigkeit auf. Dadurch kann das Netz unaufwändig hergestellt werden und hält den Belastungen gut stand. Gegenüber ABS weist PET-G eine höhere Elastizität und Witterungsbeständigkeit auf, so dass es in Bereichen mit größerer Krafteinwirkung und/oder Witterungseinwirkung für das Netz verwendet werden kann. PET-G kann auch durch Glas- oder Karbonfasern verstärkt werden. Dies verstärkt die Sicherheit des Netzes gegen ein Herausbrechen von Stegen und verringert den Reparaturbedarf. Das Netz kann auch aus einer Faser gefertigt sein. Basaltfasern, Kohlefaser und Glasfasern weisen eine hohe Widerstandsfähigkeit gegen Krafteinwirkungen auf, sodass ein solches Netz besonders gut gegen Verschleiß gesichert ist. Wenn die erste Schicht und/oder die zweite Schicht aus Epoxidharz besteht, bildet ein damit bestrichenes und/oder darin eingekapseltes Glasfasernetz einen glasfaserverstärkten Kunststoff mit einer besonders hohen Widerstandsfähigkeit und Witterungsbeständigkeit. Ein aus Metall gefertigtes Netz ist besonders robust sowie verschleißfest und eignet sich somit für Bereiche mit hoher Krafteinwirkung.

Vorzugsweise ist die zweite Schicht mit mindestens einer zusätzlichen Schutzschicht versehen, die vorzugsweise aus Polyurethan besteht. Dabei ist weiter vorzugsweise der Bodenbelag in einem der Witterung ausgesetzten Außenbereich angeordnet. Durch die zusätzliche Schutzschicht wird die zweite Schicht besser gegen Witterung und Abrieb geschützt. So wird die Einkapselung aufrechterhalten, die die Stege des Netzes an ihrer Position sichert. Auch das darunterliegende Netz wird so besser vor Abrieb und/oder Witterung geschützt.

Bei einer Anordnung des Bodenbelags in einem der Witterung ausgesetzten Außenbereich kommt der durch den Bodenbelag erweiterte Schutz vor Verschleiß und/oder Abrieb sowie gegen Einwirkung von Feuchtigkeit in Form von Niederschlag und/oder Seewasser besonders zur Geltung. Die Erfindung eignet sich besonders für der Witterung ausgesetzte Außenbereiche, da sie den dort gegebenen Anforderungen an die Rutschfestigkeit und die Beständigkeit des Bodenbelags in besonders guter Weise genügt.

Die Erfindung bezieht sich ferner auf einen rutschsicheren Bodenbelag für einen aus wenigstens zwei Segmenten bestehenden Boden, die mindestens teilweise voneinander entkoppelt sind, wobei ein erfindungsgemäßer Bodenbelag auf den wenigstens zwei Segmenten einzeln aufgebracht ist, wobei die Bodenbeläge auf den wenigstens zwei Segmenten vorzugsweise einen minimalen Abstand voneinander aufweisen, um einen Freigang zwischen den Segmenten zu gewährleisten. Unter entkoppelt wird verstanden, dass die Segmente relativ zueinander beweglich sind. Dies ermöglicht eine Verwendung des erfindungsgemäßen Bodenbelags bei Böden, die aus zwei oder mehr Segmenten bestehen, beispielsweise bei aus mehreren Planken bestehenden Rampen. Damit die Planken bzw. Segmente gegeneinander arbeiten können, muss ihr Freigang gewährleistet sein. Indem die Bodenbeläge auf den wenigstens zwei Segmenten einzeln aufgebracht sind, wobei sie vorzugsweise einen minimalen Abstand voneinander aufweisen, können die Planken sich gegeneinander bewegen, ohne den Bodenbelag zu beschädigen.

Die Erfindung bezieht sich auch auf ein Verfahren zur Herstellung eines rutschsicheren Bodenbelags, umfassend die Schritte: (a) Aufbringen einer ersten Schicht zum festen Haften auf den Boden; (b) Auflegen eines Netzes mit einer Mehrzahl von hochstehenden Stegen und mit einer Mehrzahl von den Stegen umrandeter Öffnungen auf die erste Schicht; (c) Aufbringen einer zweiten Schicht mit durchgängiger Überdeckung des Netzes; wobei die zweite Schicht in den Öffnungen des Netzes an der ersten Schicht haftet und das Netz mit seinen Stegen von der ersten Schicht von unten und von der zweiten Schicht von oben eingekapselt ist in der Weise, dass durch die erste und zweite Schicht die Stege des Netzes in ihrer jeweiligen Position gesichert sind, und wobei der Bodenbelag in einem Bereich der Stege des Netzes erhaben gegenüber dem Bodenbelag in den Öffnungen des Netzes ist.

Dieses Verfahren ermöglicht die Herstellung eines erfindungsgemäßen Bodenbelags. Durch das schichtweise Aufbauen des Belags können die Schichten und das Netz jeweils so aufgebracht werden, wie es für ihr Material und ihre Aufgabe günstig ist: Die erste Schicht kann zunächst fest an den Boden gehaftet werden, bevor das Netz aufgebracht wird. Erst wenn das Netz zumindest in einem Abschnitt auf der ersten Schicht aufliegt, wobei es auch teilweise in der ersten Schicht eingebettet sein kann, wird die zweite Schicht aufgebracht. Dies gewährleistet die vollständige Überdeckung des Netzes durch die zweite Schicht, da es beispielsweise nicht mehr zu Verschiebungen des Netzes bei der Aufbringung der zweiten Schicht kommt. Der schichtweise Aufbau erlaubt es auch, die Schichten und das Netz in der je nach Material günstigen Form anzuliefern und aufzubringen. Das Netz kann beispielsweise von einer Rolle abgerollt werden. Die erste Schicht und/oder die zweite Schicht können beispielsweise als Anstrich und/oder als aufgesprühte Schicht aufgebracht werden und/oder von einer Rolle klebfähiger Folie abgerollt werden.

Mit Vorteil wird die erste Schicht durch Anstrich und/oder durch Aufsprühen auf den Boden aufgebracht, vorzugsweise mit einem Epoxidharz. Alternativ oder zusätzlich wird die zweite Schicht durch Anstrich und/oder durch Aufsprühen auf das Netz aufgebracht, vorzugsweise mit einem Epoxidharz. Alternativ oder zusätzlich härtet die erste Schicht nach dem Aufbringen der ersten Schicht auf den Boden aus. Weiter alternativ oder zusätzlich härtet die zweite Schicht nach dem Aufbringen der zweiten Schicht aus. Unter einem Anstrich bzw. Anstreichen und/oder Aufsprühen wird ein Beschichten aus dem flüssigen, plastischen oder breiigen Zustand verstanden. Der Anstrich kann auch Putzen, Verputzen, Spachteln und/oder Lackieren umfassen. Dabei können Pinsel, Rollen und/oder Spachtel verwendet werden. Beim Aufsprühen können Sprüh- oder Spritzgeräte mit oder ohne Druckluft verwendet werden. Ein Anstrich und/oder Aufsprühen hat den Vorteil, dass die Schicht die gewünschte Oberfläche durchgängig überdeckt und auch in Kanten, die beispielsweise von den Stegen des Netzes und der darunterliegenden Schicht gebildet werden, gelangen kann. So wird das Einkapseln des Netzes und die Sicherung der Position des Netzes, die Voraussetzungen für eine gute Rutschsicherung des Bodenbelags sind, gewährleistet. Auch die Schichtdicke kann beim Anstrich und/oder Aufsprühen leicht variiert oder angepasst werden. Das Aushärten ist zweckmäßig bei einer Schicht aus einem vor dem Anstrich und/oder Aufsprühen flüssigen, plastischen oder breiigen Material, und/oder bei Verwendung eines auszuhärtenden Klebers und/oder Haftgrunds für das Haften der ersten Schicht auf dem Boden und/oder für das Haften des Netzes an der ersten Schicht. Das Aushärten der ersten Schicht kann auch vollständig oder teilweise erst nach Aufbringen des Netzes auf die erste Schicht erfolgen. Dann kann das Netz teilweise durch sein Eigengewicht oder eine äußere Kraft in die erste Schicht eingebettet werden. Mit vollständiger Aushärtung der ersten Schicht kann dann das Netz mindestens teilweise formschlüssig mit der ersten Schicht verbunden sein. Dies sichert das Netz zusätzlich gegen ein Verrutschen von Stegen beim Befahren und/oder Begehen. Mittels des Aushärtens der zweiten Schicht nach ihrem Aufbringen kann die klebende und/oder haftende Verbindung zwischen der zweiten Schicht und der ersten Schicht, und/oder zwischen der zweiten Schicht und dem Netz, verstärkt werden.

Vorzugsweise ist das Netz vor dem Auflegen zumindest teilweise als Rolle aufgerollt und wird während des Auflegens durch Abrollen, vorzugsweise in Richtung der Belastung, auf die erste Schicht aufgelegt. Dies hat den Vorteil, dass bei einem biegsamen Material für das Netz ein platzsparender Transport des Netzes möglich ist. Das Netz kann somit an einem anderen Ort als dem Ort der Ausführung des Verfahrens hergestellt werden. Das Abrollen ermöglicht ein kontrolliertes Aufbringen des Netzes auf die erste Schicht. Das Abrollen sollte vorzugsweise in Richtung der Belastung des Bodenbelags erfolgen. Dann kann insbesondere in diese Richtung die Ausrichtung der Stege des Netzes kontrolliert erfolgen und somit eine ungünstige Ausrichtung verhindert werden. Eine ungünstige Ausrichtung kann beispielsweise in einem Versatz oder einer Abweichung von einer geraden Linie bestehen.

Mit Vorteil wird das Netz vor der Ausführung der vorstehend genannten Verfahrensschritte in einem vorgeschalteten Verfahrensschritt mittels 3D-Druck gefertigt. Dabei können die gewünschten Parameter für die Profilform, die Höhe und/oder Breite der Stege und/oder die mittlere Breite der Öffnungen flexibel eingestellt und an die Eigenschaften des Einsatzbereichs angepasst werden. Beispielsweise ermöglicht dies, in einem Barfußbereich ein abgerundetes Profil und engere Öffnungen zu wählen als in einem Arbeitsbereich.

Im Übrigen wird zur Vermeidung von unnötigen Wiederholungen zwecks näherer Erläuterung auf vorstehende Beschreibung verwiesen.

Die Erfindung wird nachfolgend unter Bezugnahme auf die beigefügte Zeichnung näher anhand vorteilhafter Ausführungsformen beispielhaft erläutert. Es zeigen:
- Fig. 1a: eine Schnittdarstellung einer ersten Ausführungsform des rutschsicheren Bodenbelags mit abgerundetem Dreiecksprofil der Stege des Netzes;
- Fig. 1b: eine Schnittdarstellung einer zweiten Ausführungsform des rutschsicheren Bodenbelags mit halbrundem Profil der Stege des Netzes;
- Fig. 1c: eine Schnittdarstellung einer dritten Ausführungsform des rutschsicheren Bodenbelags mit abgeflachtem Profil der Stege des Netzes;
- Fig. 2: eine Schnittdarstellung der zweiten Ausführungsform des rutschsicheren Bodenbelags mit halbrundem Profil der Stege des Netzes bei der Benutzung durch Begehen;
- Fig. 3a-i: jeweils eine Draufsicht auf das Netz für unterschiedliche Ausführungsformen der Gitterstruktur sowie eine Pfeildarstellung der Belastungsrichtungen;
- Fig. 4: eine Schnittdarstellung einer Ausführungsform des erfindungsgemäßen Verfahrens zur Herstellung des rutschsicheren Bodenbelags in mehreren Verfahrensschritten;
- Fig. 5: eine perspektivische Ansicht einer Ausführungsvariante des Netzes mit hohen und niedrigen Stegbereichen;
- Fig. 6: eine perspektivische Ansicht einer aus Planken aufgebauten Rampe, die mit dem rutschsicheren Bodenbelag versehen ist;
- Fig. 7a-c: Beispiele für Einsatzbereiche des rutschsicheren Bodenbelags; und
- Fig. 8a, b eine: Schnittdarstellung eines Bodenbelags des Standes der Technik unbelastet und unter Belastung.

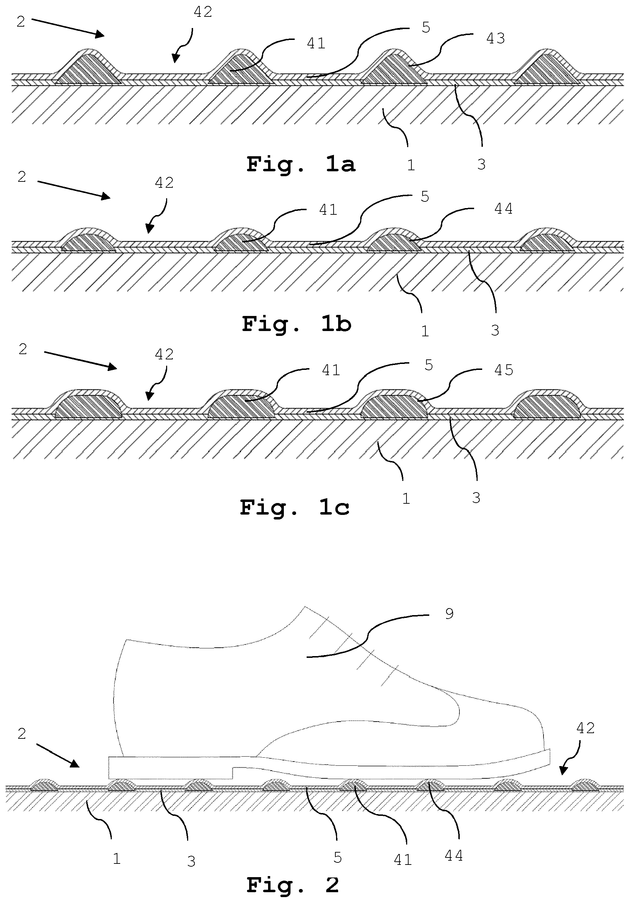

Fig. 1a zeigt einen Schnitt durch eine erste Ausführungsform des erfindungsgemäßen rutschsicheren Bodenbelags 2. Eine erste Schicht 3 ist fest haftend auf einem Boden 1 aufgebracht. Darauf befindet sich ein Netz 4, dessen Stege 41 auf der ersten Schicht 3 haften und teilweise in die erste Schicht 3 eingebettet sind. Die Stege 41 umranden Öffnungen 42 des Netzes 4.

Die Stege 41 weisen ein abgerundetes Dreiecksprofil 43 auf. Auf die erste Schicht 3 und das Netz 4 aufgebracht ist eine zweite Schicht 5. Sie haftet auf den Stegen 41 des Netzes 4 und folgt dessen abgerundeten Dreiecksprofil 43. In den Öffnungen 42 des Netzes 4 haftet die zweite Schicht 5 auf der ersten Schicht 3. Die beiden Schichten 3, 5 kapseln die Stege 41 des Netzes 4 ein und sichern sie und damit auch das Netz 4 insgesamt in ihrer Position. Die beiden Schichten 3, 5 sind bei dieser Ausführungsform durch Anstrich aufgebracht; sie könnten aber auch durch Aufsprühen oder insbesondere klebende Folien gebildet sein.

Fig. 1b zeigt eine zweite Ausführungsform des rutschsicheren Bodenbelags 2, die sich von der ersten Ausführungsform gemäß Fig. 1a in der Form des Profils des Netzes 4 unterscheidet. Das Netz 4 weist in dieser Ausführungsform ein halbrundes Profil 44 auf. Fig. 1c zeigt eine dritte Ausführungsform mit einem Netz mit abgeflachtem Halbrundprofil 45. Die beiden Schichten 3, 5 sind bei diesen Ausführungsformen durch insbesondere klebende Folien gebildet, können aber wie auch bei der ersten Ausführungsform gemäß Fig. 1a durch Anstrich aufgebracht sein und/oder durch Aufsprühen aufgebracht sein.

In allen Ausführungsformen des Netzes 4 der Figuren 1a-c weisen die Stege 41 eine Breite von 1,5 mm, eine Höhe von 0,5 mm und die Öffnungen 42 des Netzes 4 eine mittlere Breite von 2 mm auf. Die erste Schicht 3 und die zweite Schicht 5 sind jeweils 125 µm dicke Epoxidharzschichten.

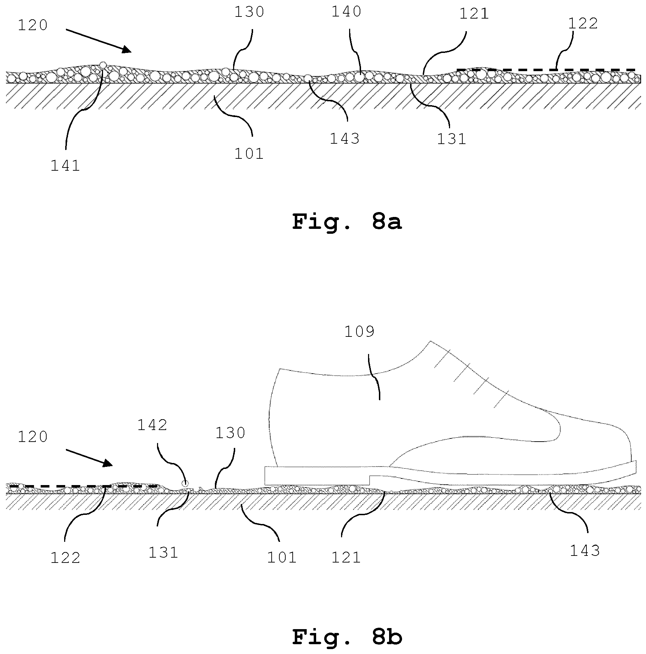

Zum Vergleich mit dem Stand der Technik zeigt Fig. 8a einen Bodenbelag 120 des Standes der Technik sowie Fig. 8b die Benutzung dieses Bodenbelags 120 des Standes der Technik durch Begehen, dargestellt durch die Belastung mit einem Schuh 109. Der Bodenbelag 120 besteht aus einer Epoxidharzschicht 130 auf einem Boden 101. In die Epoxidharzschicht 130 sind Partikel 140 eingelassen, wobei die Schichtdicke der Epoxidharzschicht 130 so gewählt ist, dass der überwiegende Anteil der Partikel 140 komplett eingebettet ist. Die Partikel 140 weisen unterschiedliche Größen auf, sind weitgehend zufällig in der Epoxidharzschicht 130 verteilt und einige Partikel 141 ragen nach oben (bodenabgewandte Seite) heraus. Die Epoxidharzschicht 130 weist aufgrund der Beimischung der Partikel 140 eine ungleichmäßige Schichtstärke 122 auf und kann sogar einige Leerstellen 121 mit weniger oder keinen Partikeln 140 aufweisen. Der Schuh 109 hat Halt auf den erhabenen Stellen des Bodenbelags 120 sowie den herausragenden Partikeln 141. Allerdings sind die aus der Oberfläche herausragenden Partikel 141 besonders anfällig für ein Herausbrechen 142 bei der Benutzung. Andere Partikel 143 haben sich wegen der Krafteinwirkung bis auf den Boden 101 vorgearbeitet und durchbrechen so den Korrosionsschutz 131. So verliert der bekannte Bodenbelag 120 mit der Zeit an Griffigkeit durch herausgebrochene Partikel und es besteht die Gefahr der Beschädigung des unterliegenden Bodens 101.

Fig. 2 zeigt die Ausführungsform des erfindungsgemäßen Bodenbelags 2 von Fig. 1b bei der Benutzung. Ein in der Figur dargestellter Schuh 9 symbolisiert die Belastung durch das Begehen des rutschsicheren Bodenbelags 2. Die von den Stegen 41 des Netzes 4 und der ersten Schicht 3 und der zweiten Schicht 5 gebildete Struktur bietet dem Schuh 9 Halt und verhindert ein Ausrutschen. Die Stege 41 nehmen die wirkenden Kräfte auf, sodass das Begehen den Bodenbelag 2 nicht beeinträchtigt. Insbesondere werden die Stege 41 wegen der Einkapselung durch die erste 3 und zweite 5 Schicht und die durch die Koppelung im Netz 4 weiträumige Kraftverteilung an ihrer Position gehalten und brechen daher nicht leicht aus dem Netz 4 heraus. Außerdem arbeiten sie sich aufgrund der flachen Unterseite nicht auf den Boden 1 vor, sodass dieser vor Korrosion geschützt bleibt. Die Einkapselung schützt so vor Verschleiß und einem Verlust an Griffigkeit, während sie gleichzeitig eine Beschädigung des unterliegenden Bodens 1 verhindert.

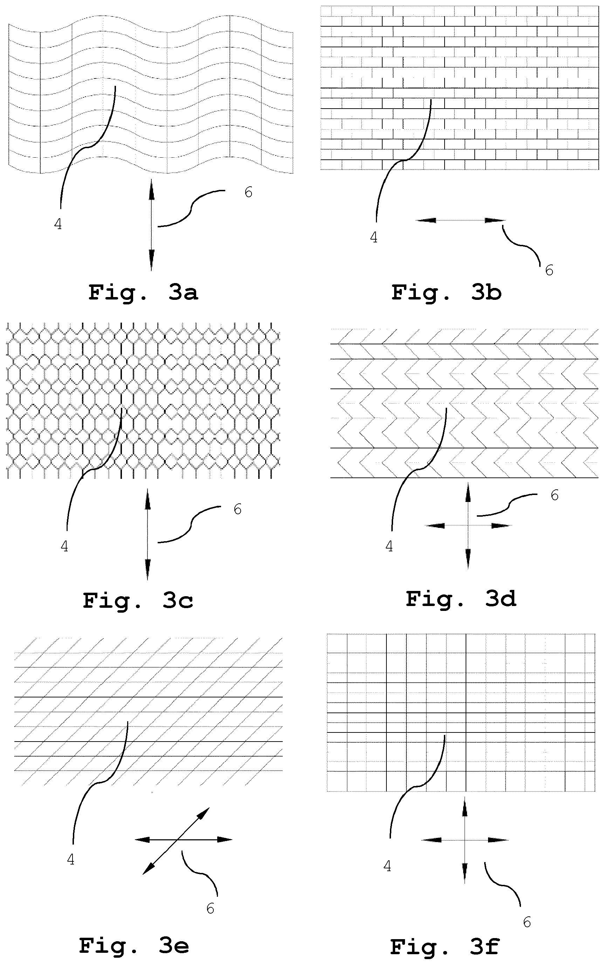

Die Figuren 3a-i zeigen Gitterstrukturen verschiedener Ausführungsformen des Netzes 4 des erfindungsgemäßen rutschsicheren Bodenbelags 2. Fig. 3a zeigt eine Ausführungsform, bei der die Stege 41 in eine (in der Figur vertikale) Richtung gerade und versatzfrei verlaufen. Diese Richtung entspricht der Hauptbelastungsrichtung 6, wie sie in Fig. 3a durch den Doppelpfeil symbolisiert ist. Die Hauptbelastungsrichtung 6 ist die Richtung, in die die meisten Fußgänger oder Fahrzeuge typischerweise auf einem Bodenbelag 2 an einem gewählten Einsatzort entlang gehen oder fahren. Die in diese Richtung verlaufenden Stege 41 nehmen die in diese Richtung wirkenden Kräfte beim Begehen und/oder Befahren auf. Fig. 3b zeigt eine Gitterstruktur des Netzes 4, bei der die Stege 41 des Netzes 4 versetzte Rechtecke bilden. In eine in der Figur horizontal verlaufende Hauptbelastungsrichtung 6 sind die Stege 41 versatzfrei angeordnet. Senkrecht dazu sind die Stege 41 versetzt angeordnet. Fig. 3c zeigt eine Ausführungsform der Geometrie des Netzes 4 mit einer langgestreckten wabenähnlichen Struktur, bei der die längeren der Stege 41 des Netzes in eine Richtung verlaufen, die der Hauptbelastungsrichtung 6 entspricht. Die in unregelmäßigen Sechsecken angeordneten langen Stege 41 des Netzes 4 nehmen so die Kräfte auf, die in die Hauptbelastungsrichtung wirken. In Fig. 3d sind die Stege 41 des Netzes 4 in horizontaler Richtung gerade und durchgängig angeordnet. In vertikaler Richtung sind die Stege unter einem Winkel zur Belastungsrichtung angeordnet. Fig. 3e zeigt eine Ausführungsform mit einer Gitterstruktur, die aus Parallelogrammen besteht. Diese eignet sich besonders für Belastungen in den Richtungen 6 entlang der Kanten der Parallelogramme. Die Gitterstruktur des Netzes 4 in Fig. 3f besteht aus Rechtecken. Diese sind in beide der Hauptbelastungsrichtungen 6 ohne Versatz angeordnet.

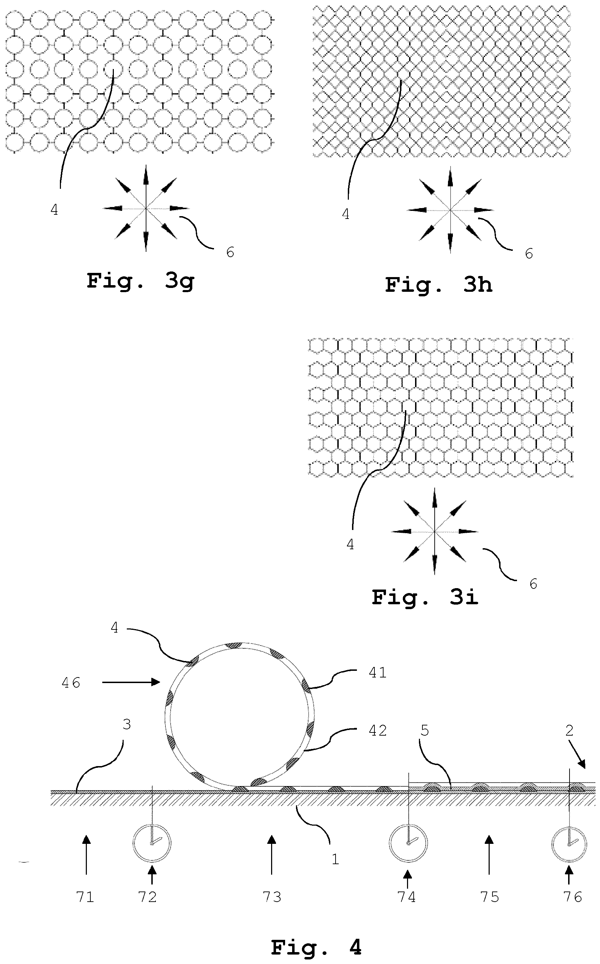

Fig. 3g zeigt eine Geometrie eines Netzes 4, die aus Kreisen und dazwischen angeordneten Verbindungslinien besteht. Diese Geometrie eignet sich für Flächen, die bei typischer Benutzung in zufälliger Richtung 6 betreten oder befahren werden, also für omnidirektionalen Publikumsverkehr. Auch die Gitterstrukturen der Netze 4 in Fig. 3h aus Sechsecken mit zwei rechten Winkeln und in Fig. 3i aus regelmäßigen Sechsecken eignen sich für omnidirektionale Belastung 6.

Fig. 4 zeigt eine Ausführungsform eines Verfahrens zur Herstellung des rutschsicheren Bodenbelags 2. In der Figur sind in einer Abfolge von links nach rechts mehrere Schritte des Verfahrens dargestellt. Zunächst wird in Schritt 71 durch Anstrich eine 125 µm dicke erste Schicht 3 aus Epoxidharz auf den Boden 1 aufgebracht. Nach einer ersten Wartezeit 72, in der das Epoxidharz teilweise aushärtet, wird in Schritt 73 das Netz 4 aufgebracht. Dazu wird das als Rolle 46 vorliegende Netz 4 von der Rolle 46 auf die erste Schicht 3 abgerollt. Ist das Epoxidharz der ersten Schicht 3 noch nicht vollständig ausgehärtet, drücken sich die Stege 41 des Netzes 4 durch das Eigengewicht teilweise in das Epoxidharz der ersten Schicht 3. Nach Aufbringen des Netzes 4 auf die erste Schicht 3 härtet das Epoxidharz der ersten Schicht 3 in einer zweiten Wartezeit 74 weiter aus. Die jeweilige Wartezeit ergibt sich in der Regel aus dem durch das Material der ersten Schicht bestimmten Zeitdauer für die Überstreichbarkeit einerseits und der Vollaushärtung andererseits, und liegt typischerweise im Bereich von einigen Stunden, bspw. 2h für die erste Wartezeit bzw. 10h für die zweite Wartezeit. In einem weiteren Verfahrensschritt 75 wird die zweite Schicht 5 aufgebracht. Die zweite Schicht 5 besteht ebenfalls aus einem Anstrich mit Epoxidharz. Das Epoxidharz folgt dem Profil der Stege 41 des Netzes 4. So werden die Stege 41 des Netzes 4 von der ersten Schicht 3 und der zweiten Schicht 5 eingekapselt. Die zweite Schicht 5 härtet innerhalb einer dritten Wartezeit 76 aus. So kann eine Beschichtung für die rauen Verhältnisse auf einem Schiffsdeck aus einer ersten Schicht aus 125 µm Epoxidharz, zum Beispiel aus dem Material Hempadur Quattro^{®} der Fa. Hempel, und einer zweiten Schicht aus weiteren 125 µm Epoxidharz aus demselben Material sowie einem Überzug aus 80 µm Polyurethandecklack, zum Beispiel Hempathane Topcoat^{®} der Fa. Hempel, bestehen; hierbei ist das Epoxidharz nach 7 bis 28 Tagen und der PU-Decklack nach 7 Tagen voll durchgehärtet.

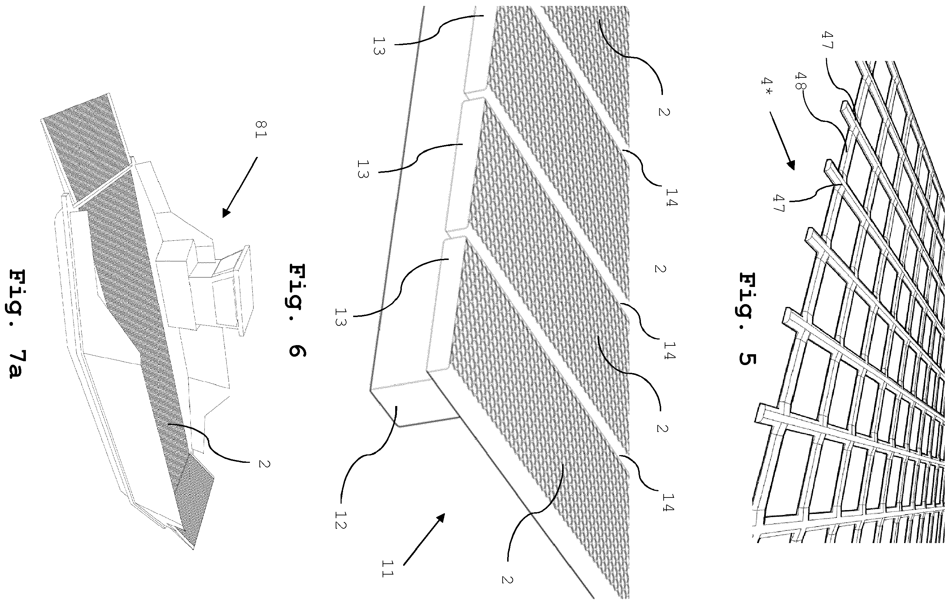

Eine Ausführungsvariante 4* für das Netz ist in Fig. 5 dargestellt. Bei dem Netz 4* sind die Stege abschnittsweise verschieden hoch ausgeführt, so dass das Netz 4* Bereiche mit höheren Stegen 47 und Bereiche mit niedrigeren Stegen 48 umfasst. Damit kann die Aquaplaning-Gefahr insbesondere beim Befahren verringert werden. Das Rad fährt dann größtenteils auf den Bereichen mit höheren Stegen 47 und berührt die niedrigeren Bereiche der Stege 48 nur noch in geringem Umfang, was eine Lücke für das Wasser lässt. Das Wasser kann so aus dem Volumen zwischen Boden und Reifen entweichen, wodurch Aquaplaning vermieden wird.

Fig. 6 zeigt eine aus Planken 13 bestehende Rampe 11 auf einer Tragstruktur 12, die mit einer Ausführungsform des erfindungsgemäßen rutschsicheren Bodenbelags 2 versehen ist. Auf jeder der Planken 13 ist einzeln der Bodenbelag 2 aufgebracht. Der Bodenbelag 2 weist zwischen den Planken 13 somit einen Abstand 14 auf, sodass sich die Planken 13 bei Belastung gegeneinander in beliebige Richtung bewegen können, ohne dass der Bodenbelag 2 davon beeinträchtigt wird.

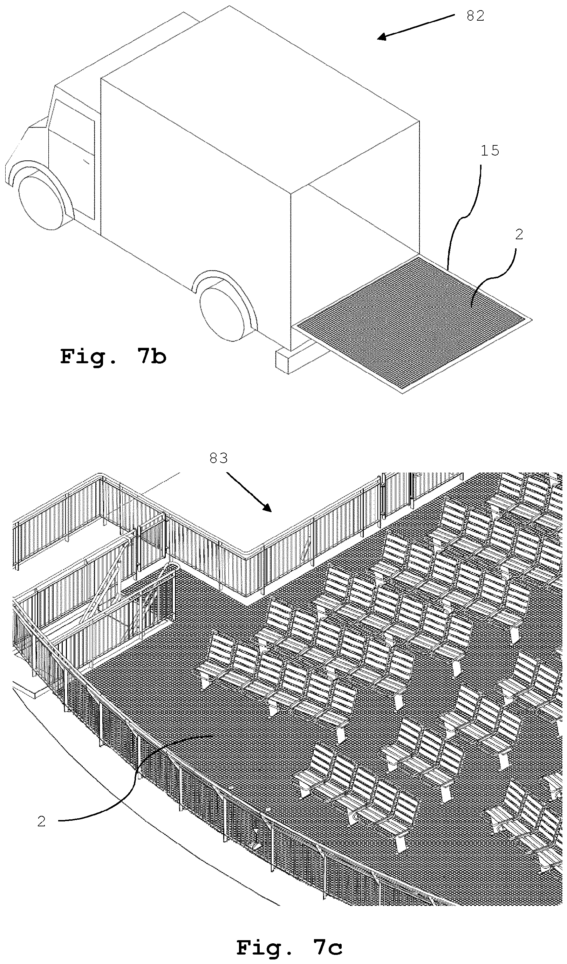

Fig. 7a zeigt eine Personen- und Autofähre 81 als Einsatzbereich für den rutschsicheren Bodenbelag 2. Der Bodenbelag 2 ist auf die befahrenen und begangenen Flächen aufgetragen. Auf der Fähre 81 kann auf einer Oberfläche versammelter Niederschlag, Seewasser und/oder Gischt den Reibwert so weit verringern, dass Personen oder Fahrzeuge ins Rutschen kommen. Der rutschsichere Bodenbelag 2 verhindert dies. Fig. 7b zeigt einen weiteren möglichen Einsatzort, nämlich eine Ladebordwand 15 eines Lastkraftwagens 82. Diese Fläche ist im Betrieb Witterung ausgesetzt und mit einem rutschsicheren Bodenbelag 2 ausgestattet. Fig. 7c zeigt ein Sonnendeck 83 eines Passagierschiffs, das mit einem rutschsicheren Bodenbelag 2 versehen ist.

## Patentansprüche

1. Rutschsicherer Bodenbelag, umfassend
- eine erste Schicht (3), die zum festen Haften auf einem Boden ausgebildet ist,
- ein Netz (4) mit einer Mehrzahl von hochstehenden Stegen (41) und mit einer Mehrzahl von den Stegen umrandeter Öffnungen (42), das auf die erste Schicht (3) aufgebracht ist, und
- eine zweite Schicht (5), die das Netz (4) durchgängig überdeckt,
wobei die zweite Schicht (3) in den Öffnungen (42) des Netzes (4) an der ersten Schicht (3) haftet und das Netz (4) mit seinen Stegen (41) von der ersten Schicht (3) von unten und von der zweiten Schicht (5) von oben eingekapselt ist in der Weise, dass durch die erste und zweite Schicht (3, 5) die Stege (41) des Netzes in ihrer jeweiligen Position gesichert sind,
und wobei der Bodenbelag (2) in einem Bereich der Stege (41) des Netzes (4) erhaben gegenüber dem Bodenbelag (2) in den Öffnungen (42) des Netzes (4) ist.

2. Rutschsicherer Bodenbelag nach Anspruch 1, **dadurch gekennzeichnet, dass** das Netz (4) teilweise in die erste Schicht (3) eingebettet ist, so dass die Stege (41) des Netzes (4) mindestens teilweise formschlüssig mit der ersten Schicht (3) verbunden sind.

3. Rutschsicherer Bodenbelag nach einem der vorangehenden Ansprüche, **dadurch gekennzeichnet, dass** die erste Schicht (3) ein Epoxidharz umfasst, das vorzugsweise als Anstrich und/oder als aufgesprühte Schicht auf dem Boden haftet, und/oder dass die zweite Schicht ein Epoxidharz umfasst, das vorzugsweise als Anstrich und/oder als aufgesprühte Schicht auf der ersten Schicht (3) haftet, wobei vorzugsweise die erste und/oder die zweite Schicht (3, 5) eine Dicke von mindestens 30 µm und höchstens 250 µm, vorzugsweise mindestens 50 µm und höchstens 150pm, weiter vorzugsweise mindestens 60 µm und höchstens 100 µm, aufweist.

4. Rutschsicherer Bodenbelag nach einem der vorangehenden Ansprüche, **dadurch gekennzeichnet, dass** die erste Schicht (3) eine klebfähige, vorzugsweise zugfeste, Folie umfasst und/oder dass die zweite Schicht (5) eine klebfähige, vorzugsweise zugfeste, Folie umfasst.

5. Rutschsicherer Bodenbelag nach einem der vorangehenden Ansprüche, **dadurch gekennzeichnet, dass** das Netz (4) als eine aus den Stegen (41) des Netzes (4) gebildete Gitterstruktur aus Rechtecken und/oder Sechsecken und/oder Parallelogrammen und/oder Kreisen ausgeführt ist, und/oder dass die Stege (41) des Netzes (4) in einer Hauptrichtung der Belastung (6) mindestens teilweise versatzfrei verlaufen und/oder in eine Mehrzahl von Richtungen der Belastung mindestens teilweise versatzfrei verlaufen.

6. Rutschsicherer Bodenbelag nach einem der vorangehenden Ansprüche, **dadurch gekennzeichnet, dass** die Stege (41) des Netzes (4) eine flache Unterseite aufweisen, wobei sie vorzugsweise ein halbrundes Profil (44) aufweisen mit einer nach oben weisenden Rundung und/oder ein dreieckiges Profil (43) aufweisen, wobei die Spitze nach oben weist, und wobei vorzugsweise das Profil einen großen Radius aufweist.

7. Rutschsicherer Bodenbelag nach einem der vorangehenden Ansprüche, **dadurch gekennzeichnet, dass** die Stege (41) des Netzes (4) eine Höhe von wenigstens 0,2 mm und höchstens 2,0 mm aufweisen, und/oder dass die Stege (41) des Netzes (4) eine Breite von wenigstens 0,6 mm und höchstens 12 mm aufweisen, und/oder dass die Öffnungen (42) des Netzes (4) eine mittlere Breite von höchstens 100 mm, vorzugsweise wenigstens 2 mm, aufweisen.

8. Rutschsicherer Bodenbelag nach einem der vorangehenden Ansprüche, **dadurch gekennzeichnet, dass** die Stege (41) abschnittsweise verschieden hoch ausgeführt sind, so dass das Netz (4) Bereiche mit höheren Stegen (47) und Bereiche mit niedrigeren Stegen (48) umfasst.

9. Rutschsicherer Bodenbelag nach einem der vorangehenden Ansprüche, **dadurch gekennzeichnet, dass** die Stege (41) des Netzes (4) mittels 3D-Druck gefertigt sind; und/oder dass die Stege (41) des Netzes (4) aus Acrylnitril-Butadien-Styrol-Copolymer (ABS) und/oder aus Polyethylenterephthalat-Glykol (PET-G) und/oder aus Metall und/oder aus einer Faser, vorzugsweise Basaltfaser, weiter vorzugsweise Kohlefaser, besonders bevorzugt Glasfaser, gefertigt sind.

10. Rutschsicherer Bodenbelag nach einem der vorangehenden Ansprüche, **dadurch gekennzeichnet, dass** die zweite Schicht (5) mit mindestens einer zusätzlichen Schutzschicht versehen ist, die vorzugsweise aus Polyurethan besteht, wobei weiter vorzugsweise der Bodenbelag (2) in einem der Witterung ausgesetzten Außenbereich angeordnet ist.

11. Rutschsicherer Bodenbelag für einen aus wenigstens zwei Segmenten (13) bestehenden Boden, die mindestens teilweise voneinander entkoppelt sind, wobei ein Bodenbelag (2) nach einem der vorangehenden Ansprüche auf den wenigstens zwei Segmenten (13) einzeln aufgebracht ist, wobei die Bodenbeläge auf den wenigstens zwei Segmenten (13) vorzugsweise einen minimalen Abstand (14) voneinander aufweisen, um einen Freigang zwischen den Segmenten (13) zu gewährleisten.

12. Verfahren zur Herstellung eines rutschsicheren Bodenbelags, umfassend die Schritte:
a) Aufbringen (71) einer ersten Schicht (3) zum festen Haften auf den Boden (1),
b) Auflegen (73) eines Netzes (4) mit einer Mehrzahl von hochstehenden Stegen (41) und mit einer Mehrzahl von den Stegen umrandeter Öffnungen (42) auf die erste Schicht (3),
c) Aufbringen (75) einer zweiten Schicht (5) mit durchgängiger Überdeckung des Netzes (4),
wobei die zweite Schicht (5) in den Öffnungen (42) des Netzes (4) an der ersten Schicht (3) haftet und das Netz (4) mit seinen Stegen (41) von der ersten Schicht (3) von unten und von der zweiten Schicht (5) von oben eingekapselt ist in der Weise, dass durch die erste und zweite Schicht die Stege (41) des Netzes (4) in ihrer jeweiligen Position gesichert sind,
und wobei der Bodenbelag (2) in einem Bereich der Stege (41) des Netzes (4) erhaben gegenüber dem Bodenbelag (2) in den Öffnungen (42) des Netzes (4) ist.

13. Verfahren nach Anspruch 12, **dadurch gekennzeichnet, dass** die erste Schicht (3) durch Anstrich und/oder durch Aufsprühen auf den Boden (1) aufgebracht wird, vorzugsweise mit einem Epoxidharz, und/oder dass die zweite Schicht (5) durch Anstrich und/oder durch Aufsprühen auf das Netz (4) aufgebracht wird, vorzugsweise mit einem Epoxidharz; und/oder dass die erste Schicht (3) nach dem Aufbringen der ersten Schicht auf den Boden (1) aushärtet und/oder dass die zweite Schicht (5) nach dem Aufbringen der zweiten Schicht aushärtet.

14. Verfahren nach Anspruch 12 oder 13, **dadurch gekennzeichnet, dass** das Netz (4) vor dem Auflegen zumindest teilweise als Rolle (46) aufgerollt ist und während des Auflegens durch Abrollen, vorzugsweise in Richtung der Belastung, auf die erste Schicht (3) aufgelegt wird.

15. Verfahren nach einem der Ansprüche 12 bis 14, **dadurch gekennzeichnet, dass** das Netz (4) in einem vorgeschalteten Verfahrensschritt mittels 3D-Druck gefertigt wird.
